# EUROPEAN PATENT SPECIFICATION

(11) **EP 1 571 446 B1**
(45) Date of publication and mention of the grant of the patent: **02.03.2011**
(21) Application number: 03812694.2
(22) Date of filing: 01.12.2003
(51) Int. Cl.: G01N 31/22, G01N 37/00, B01J 19/00, B01L 3/00

(54) **METHOD FOR MANUFACTURING TOOL FOR ANALYSIS**
VERFAHREN ZUR HERSTELLUNG VON WERKZEUGEN FÜR ANALYSEN
PROCEDE DE FABRICATION D'UN OUTIL D'ANALYSE

(30) Priority: 02.12.2002 JP 2002350197
(43) Date of publication of application: 07.09.2005
(73) Proprietor: ARKRAY, Inc., Kyoto 601-8045 (JP)
(72) Inventor: FUKUYA, Hiroshi, Kyoto-shi, Kyoto 601-8045 (JP); NAKAMURA, Tsutomu, Kyoto-shi, Kyoto 601-8045 (JP); AONO, Takafumi, Kyoto-shi, Kyoto 601-8045 (JP)
(74) Representative: Golding, Louise Ann
(86) International application number: PCT/JP2003/015357
(87) International publication number: WO 2004/053480

(56) References cited:
- EP-A- 1 046 912
- WO-A-95/06868
- DE-C1- 19 923 761
- JP-A- 3 031 749
- JP-A- 8 247 946
- JP-A- 11 142 408
- JP-A- 2000 229 245
- JP-A- 2002 340 914

## Description

### TECHNICAL FIELD

The present invention relates to a method of manufacturing an analytical tool used for analyzing a specific component contained in a sample. Specifically, the analytical tool to be made includes a reagent member provided with a reagent that reacts with the specific component.

### BACKGROUND ART

A known example of sample-analyzing methods employs an optical technique for analyzing reaction liquid resulting from the reaction between the sample and a reagent. In analyzing a sample with such an technique, use is made of an analytical tool that provides a reaction field. In particular, to analyze a small amount of sample, a micro device formed with a narrow flow path is used as the analytical tool. The reaction between the sample and the reagent on the analytical tool can be caused by supplying the sample to a reagent member formed on the analytical tool.

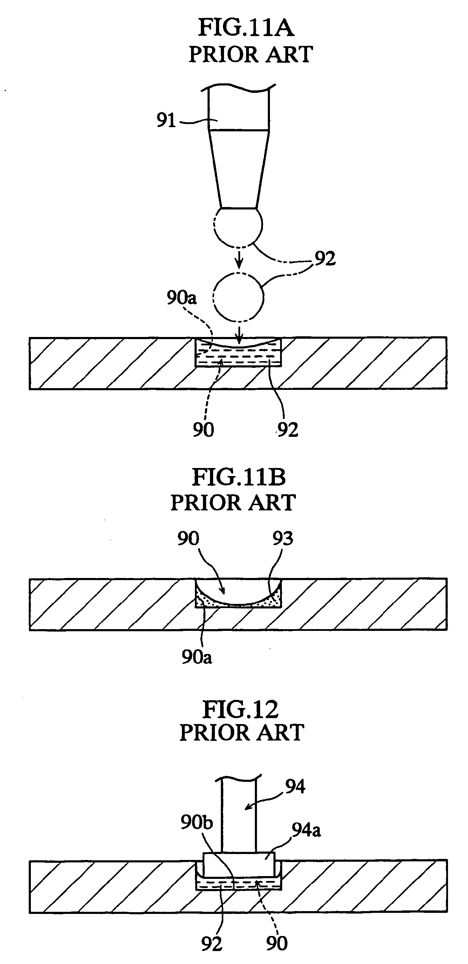

The reagent member of the analytical tool is formed by providing a reaction site 90 with material liquid 92 containing the reagent, as shown in Fig. 11A, and then drying the material liquid 92, as shown in Fig. 11B. Typically, as shown in Fig. 11A, use is made of a dispenser 91 for supplying the material liquid 92 to the reaction site 90. The material liquid 92 can also be supplied using an inkjet-type dispenser (refer to JP-A-2000-229245, for example).

In the above-described method of forming the reagent member, the drying of the material liquid 92 held in the reaction site 90 proceeds in a manner such that the material liquid 92 evaporates actively at the central part of the reaction site 90, thereby increasing the density of the solid. On the other hand, in a micro device with a very narrow path including the reaction site 90, the material liquid 92 comes into contact with the side surfaces 90a of the reaction site 90 and remains there, even in drying, due to the surface tension (capillary action) of the material liquid 92. Thus, the evaporation rate in drying the material liquid 92 is greater for the material liquid 92 at the central part of the reaction site 90 than for the material liquid 92 at the circumferential part of the reaction site 90. As a result, as shown in Fig. 11B, the resultant reagent member 93 has a smaller thickness at the central part and a larger thickness at the circumferential part contacting with the side surface 90a. In other words, with the analytical tool such as a micro device, the method of forming the reagent member 93 using the dispenser 91 gives rise to irregularities in the thickness of the reagent member 93. Moreover, when the reagent member 93 is dissolved, the density of the reagent over the reaction site varies.

A solution to this problem may be, as shown in Fig. 12, to use a pressure rod 94 for putting pressure on the surface of the material liquid 92 held in the reaction site 90, and in this state, to dry the material liquid 92 for forming the reagent member (refer to JP-A-H9-101297, for example).

By drying the material liquid 92, with the surface of the material liquid 92 pressurized by the pressure rod 94, the reagent member may have a uniformed thickness over the contacting area with the pressure rod 94, thereby preventing the variation in the concentration of the reagent. However, as shown in Fig. 12, if the surface of the material liquid 92 is pushed only at the central portion of the reaction site 90, the circumferential part at the reaction site 90 may have a thickness larger than at the central part, as when the pressure rod 94 is not used.

In order to minimize the thickness irregularities, the size of the pressing portion 94a of the pressure rod 94 should be close to the size of the reaction site 90. However, as noted above, the reaction site 90 of the micro device is small. Thus, forming a pressing portion 94a having a size close to that of the reaction site 90 requires the attainment of close tolerance. Due to this, the production of the pressure rod 94 becomes difficult, and disadvantageous in terms of production cost. Further, the reagent member of the micro device may be formed as a thin layer having a thickness of no greater than 10µm. With such a reagent member, to prevent irregularities in thickness, it is necessary to maintain a high level of parallelism in pushing the surface of the material liquid 92 between the bottom surface 90b of the reaction site 90 and the pressing portion 94a. To meet this requirement, the pressure rod 94 needs to be made with high processing accuracy. In addition, the pressure rod 94 also needs to be positioned with high accuracy in pressurizing the material liquid 92. Accordingly, the surface pressurizing technique with respect to the material liquid 92 by using the pressure rod 94 is disadvantageous for forming a reagent member in terms of workability and operationality.

In WO-A-9 506 868 the application of two reagents is disclosed.

### DISCLOSURE OF THE INVENTION

An obj ect of the present invention is to provide a method of manufacturing an analytical tool having a reagent member, whereby even a small reagent member can be made at low cost and with minimum irregularities in thickness.

According to the present invention, there is provided a method of manufacturing an analytical tool, the method comprising a reagent member forming process for providing a base plate with a reagent member containing a reagent that reacts with a specific component contained in sample liquid. The forming process includes a plurality of applying and drying steps in which material liquid containing the reagent is applied and then the material liquid is dried. and is characterized by repeating the applying and drying step a plurality of times using the material liquid containing the same reagent until the reagent member grows from an initial dry thickness (T1) to a greater dry thickness (T2).

The plurality of applying and drying steps may be performed 2-200 times with use of material liquid containing the same reagent. The material liquid may contain 0.1-60wt% of reagent.

The analytical tool to be made by the method of the present invention may include a base plate provided with a reagent holding portion at which a reagent member is formed. In such an instance, the reagent holding portion may be formed as a recess having a bottom surface and a side surface, and the reagent member may be formed in contact with the bottom surface of the reagent holding portion. The reagent holding portion may have a depth of 50-200µm, for example. Preferably, the reagent member may be formed apart from the side surface of the reagent holding portion. Thus, the material liquid is applied to an area of the bottom surface apart from the side surface by a constant distance. The distance between the side surface and the area applied with the material liquid may be no smaller than 0.1µm. The reagent holding portion may have a volume of 0.05-5µL, for example.

Preferably, the material liquid may be applied with use of an inkjet-type dispenser. The dispenser may be designed to dispense a droplet of 10-2000pL. In such an instance, the application of the material liquid may be performed by using the dispenser in a manner such that a plurality of droplets are attached to an application target portion. The amount of the material liquid applied in each of the applying and drying steps may be 1-200nL.

The drying process of the material liquid may be attained by supply of heat energy for example. The heat energy may be supplied by utilizing a radiant heat by irradiating infrared rays to be applied from above the material liquid, or by holding a heat source in contact with the rear surface of the base plate. Of course, the material liquid may be dried by air blowing.

A thin layer having a thickness of 0.1-5.0µm may be formed in each of the applying and drying steps. The resultant reagent member may be formed to have a thickness of 1.0-50.0µm after the reagent member forming process is completed.

The analytical tool to be made by the method according to the present invention may include a reagent member formed by laminating a plurality of reagent layers containing different reagents. The present invention may also employed to make an analytical tool provided with an assembly of separate reagent members containing different reagents, or to make an analytical tool provided with a plurality of reagent members that contain different reagents and are spaced from each other in a plane.

### BRIEF DESCRIPTION OF THE DRAWINGS

Fig. 1 is an overall perspective view illustrating an example of an analytical tool made by a producing method according to the present invention.
Fig. 2 is a sectional view taken along lines II-II in Fig. 1.
Fig. 3 is an overall perspective view illustrating a aggregate plate, and an enlarged sectional view illustrating a principal part of the aggregate plate.
Fig. 4 is an overall perspective view illustrating the aggregate plate formed with reagent members at reagent holding portions.
Fig. 5 is a perspective view illustrating a principal part of a dispenser and a sectional view illustrating a principal part of the aggregate plate, for illustrating a coating process of the material liquid to the reagent holding portions.
Fig. 6A is a sectional view illustrating a principal part of the aggregate plate applied with the material liquid at the reagent holding portions. Fig. 6B is a sectional view illustrating a principal part of the aggregate plate in which the material liquid is dried.
Fig. 7 is a sectional view illustrating a principal part of the aggregate plate where the reagent member is finished.
Fig. 8 is an overall perspective view showing an analytical tool collection for illustrating a fitting process of a cover sheet.
Figs. 9A and 9B are views illustrating another examples of the analytical tool made by the method of the present invention.
Figs. 10A and 10B are views illustrating additional examples of the analytical tool made by the method of the present invention.
Fig. 11 is a sectional view illustrating an example of a forming procedure of the reagent member of a conventional analytical tool.
Fig. 12 is a sectional view illustrating another example of the forming procedure of the reagent member of a conventional analytical tool.

### BEST MODE FOR CARRYING OUT THE INVENTION

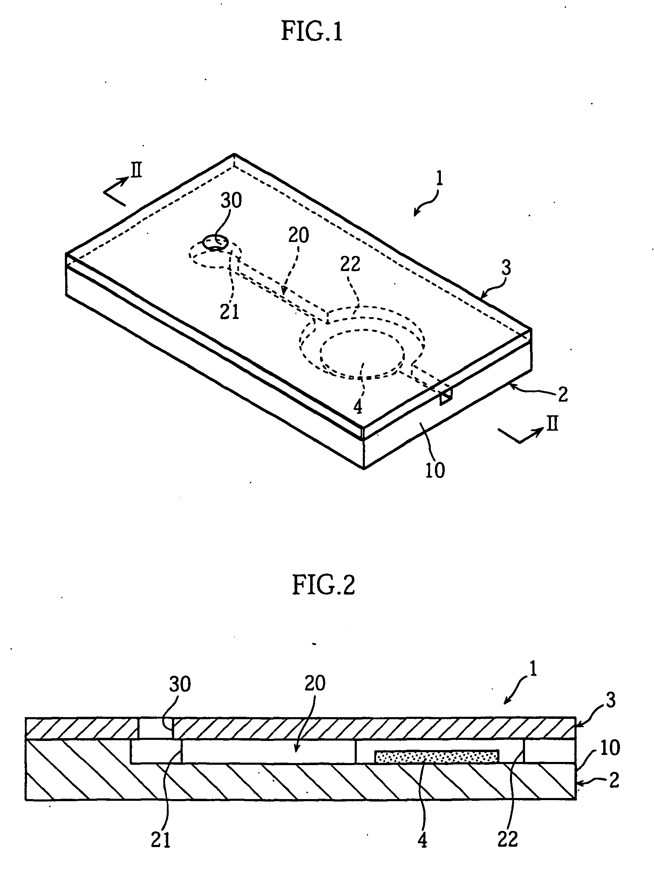

The present invention relates to a method of manufacturing analyzing tools. Before the description of the method, an example of the analyzing tool made by the method is described referring to Figs. 1 and 2.

Figs. 1 and 2 illustrate an analytical tool 1 which is a micro device adapted for analyzing a very small amount of sample. In the analytical tool 1, the sample liquid is caused to move by capillary action, and provides a reaction field. The analytical tool 1 includes a base plate 2 formed with a very narrow path 20 and a cover 3 arranged on the base plate for covering the path 20. The path 20 includes a liquid receiving portion 21 and a reagent holding portion 22, and is open at an end face 10 of the analytical tool 1. The reagent holding portion 22 is provided with a reagent member 4 containing a reagent that reacts with a specific component in the sample liquid. The cover 3 is formed with an inlet port 30 communicating with the liquid receiving portion 21 of the base plate 2 for introducing the sample into the path 20.

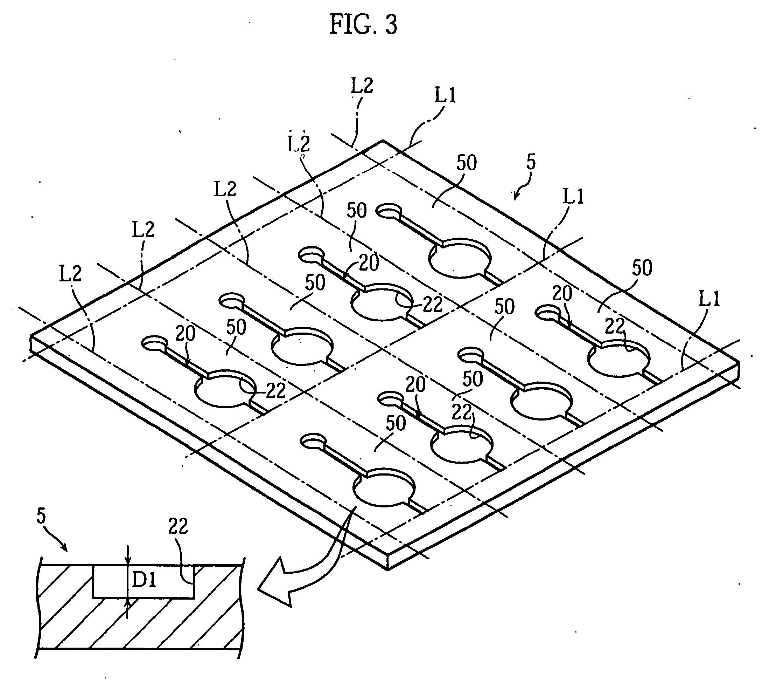

Next, an example of method for producing the analytical tool according to the present invention is described with reference to Figs. 3-8.

First, an aggregate plate 5 shown in Fig. 3 is prepared. The aggregate plate 5 comprises a plurality of base plate forming areas 50 comparted by virtual cutting lines L1, L2. Each base plate forming area 50 is formed with a path 20 including a reagent holding portion 22. The reagent holding portion 22 has a depth D1 of 50-200µm and a volume of 0.05-5µL, for example. The aggregate plate 5 may be made by molding a resin material. Alternatively, the aggregate plate 5 may be made by laser processing or etching with respect to a resin board.

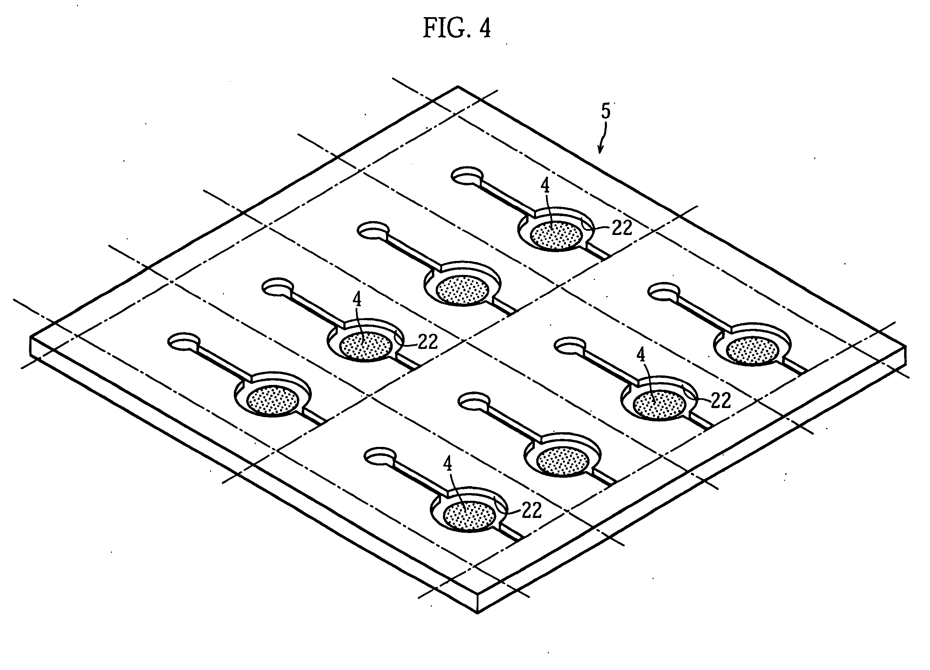

Next, as shown in Fig. 4, each reagent holding portion 22 of the aggregate plate 5 is provided with a reagent member 4. The reagent member 4 may be made by repeating a coating and drying procedure whereby material liquid is applied to the reagent holding portion 22 and then dried.

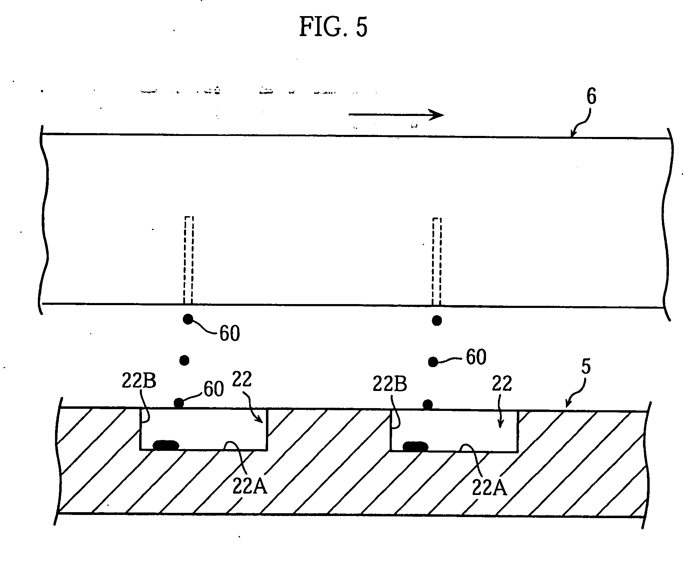

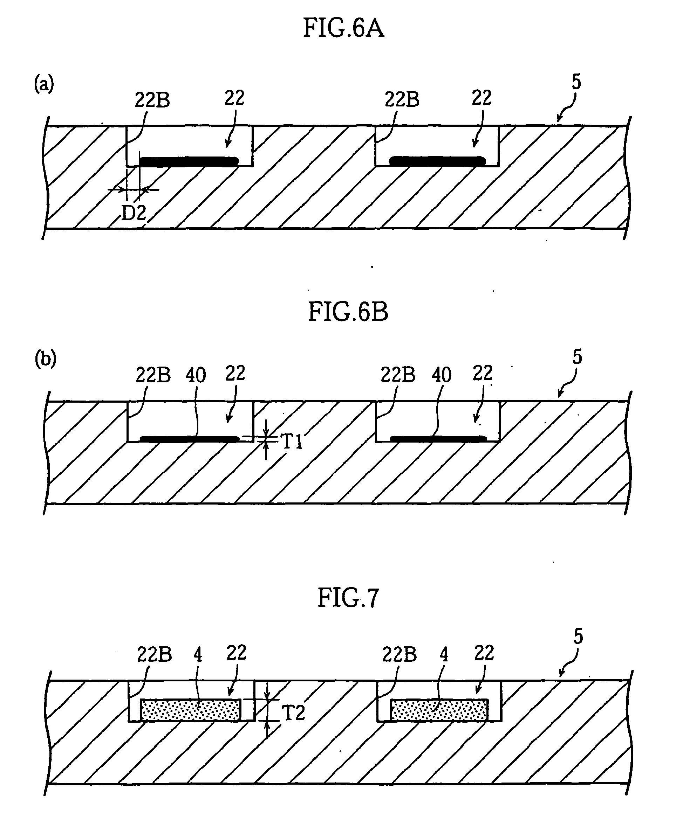

As shown in Fig. 5, the coating process of the material liquid is performed by an inkjet-type dispenser 6. The dispenser 6 is designed to dispense a droplet of 10-2000pL, for example. With use of the dispenser 6 for material liquid application, droplets 60 of the material liquid are dispensed from the dispenser 6 while the dispenser 6 is moved, so that a number of droplets 60 are applied to the bottom surface 22A of each reagent holding portion 22. In accordance with this coating method for material liquid, it is possible to apply the material liquid to a region that is apart from the side surfaces 22b of the reagent holding portion 22 by a constant distance (a region of the bottom surface 22A of the reagent holding portion 22 except a peripheral area) . Fig. 6A illustrates an example where the material liquid is applied on an area apart from the side surface 22B, where the distance D2 between the area to be coated with the material liquid and the side surface 22B is no smaller than 0.1µm, for example.

The drying of the material liquid may be performed by heating or air-blowing. In the embodiment of the present invention, the material liquid, which is desirable to be dried within as short time as possible, can be dried within about 0.5-30 seconds by supplying heat energy, for example. The heat energy is supplied by applying radiant heat from above the sample liquid, for example. The radiant heat is applied by irradiating rays such as infrared rays or near-infrared rays, using an oscillator for oscillating infrared rays or near-infrared rays. Of course, a ray of wavelength different from infrared rays or near-infrared rays can be irradiated to apply radiant heat to the sample liquid. The heat energy can also be supplied by heat conduction from a heat source held in contact with the rear surface of the aggregate plate 5.

The drying of the material liquid produces a thin layer 40 having a thickness T1 smaller than that of the applied material liquid, as shown in Fig. 6B, due to the evaporation of the moisture contained in the material liquid.

In the present embodiment, the material liquid is prepared by dispersing a reagent in a solvent. The concentration of the reagent in the material liquid is 0.1-60wt%, for example. Water is typically used as the solvent. An organic solvent may be used depending on the kinds of the reagents.

When the reagent holding portion 22 is formed to have the above-described depth D1 and volume (see Fig. 3), the amount of the material liquid applied in each coating-drying process is 1-200nL, for example. In this case, as shown in Fig. 6B, the thin layer 40 having the thickness T1 of 0.1-5µm is formed at each coating-drying process. As described above, such coating-drying process is performed an appropriate number of times, typically 2-200 times. In this case, the reagent member 4 is formed to a thickness T2 of 1-50µm (see Fig. 7).

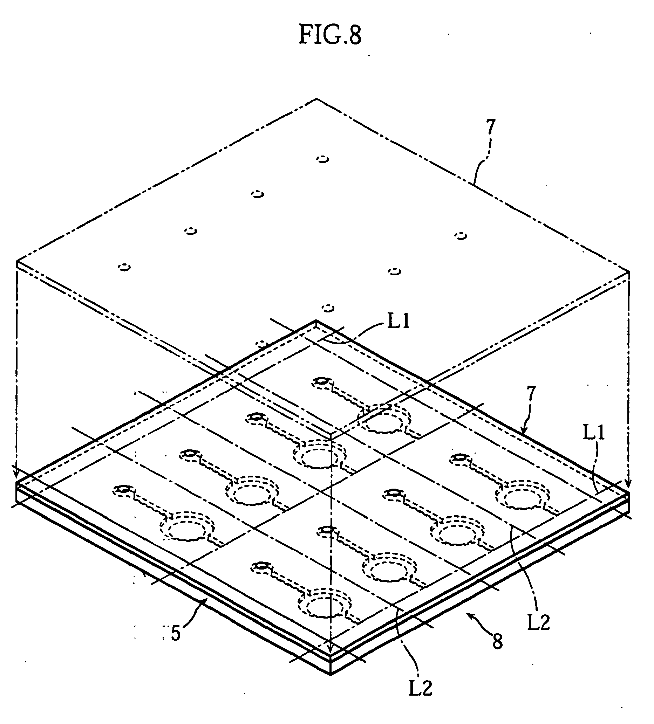

Next, as shown in Fig. 8, a cover sheet 7 is adhered to the aggregate plate 5 to form an analytical tool collection 8. Thereafter, the analytical tool collection 8 is cut along the cutting lines L1, L2 to make individual analytical tools 1 shown in Figs. 1 and 2.

In the above-described method, the forming procedure of the reagent member is divided into a plurality of steps of applying and drying material liquids. Thus, in each drying process, the material liquid is dried quickly to form the thin layer 40 as shown in Fig. 6B, and finally the reagent member 4 is formed of laminated thin layers 40 as shown in Fig. 7. The thin layer 40 formed in each coating-drying process has a small thickness and thus has less irregularities in thickness. Accordingly, the resultant reagent member 4 also has less irregularities in thickness.

In the present embodiment, the material liquid is applied to the reagent holding portion 22 at a portion apart from the side surfaces 22B (see Fig. 6A). In this way, as shown in Fig. 6B and 7, the material liquid is prevented from sticking to the side surfaces 22B in drying. As a result, the thin layer 40 has less irregularities in thickness, thereby reducing irregularities in thickness of the reagent member 4. The present embodiment is advantageous in utilizing the inkjet-type dispenser, which supplies a very small amount of droplet for applying the material liquid, so that the thin layer 40 is formed at the very small reagent holding portion 22 without contacting with the side surface 22B.

According to the present invention, as understood from the above description, the thickness irregularities of the reagent member 4 can be reduced, even when the reagent member 4 is very small. Thus, it is possible to achieve uniformity in the concentration of the reagent member 4 when the member is dissolved by the supplied sample. This advantage can be obtained without performing the conventional drying process of the material liquid where the material liquid is pressurized by a pressure rod. Thus, in accordance with the above-descried method, the reagent member 4 and hence the analytical tool 1 can be manufactured at advantageously low costs, since there is no cost for producing a pressure rod and no need to operate a pressure rod precisely.

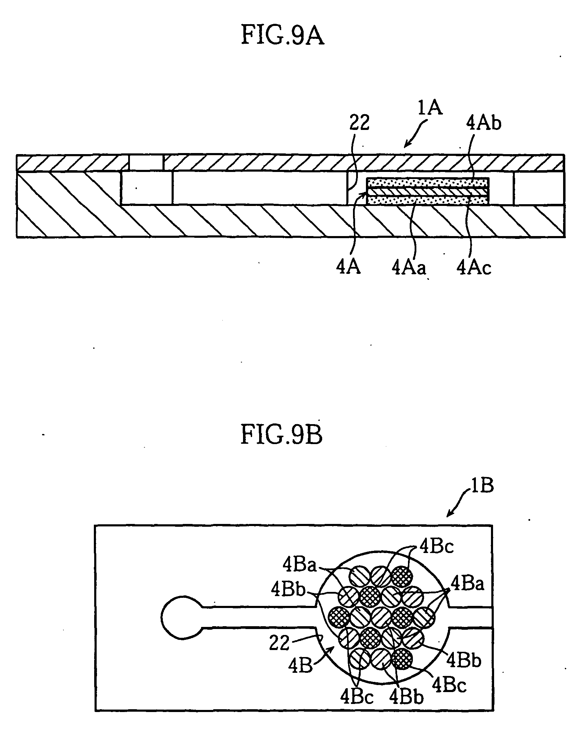

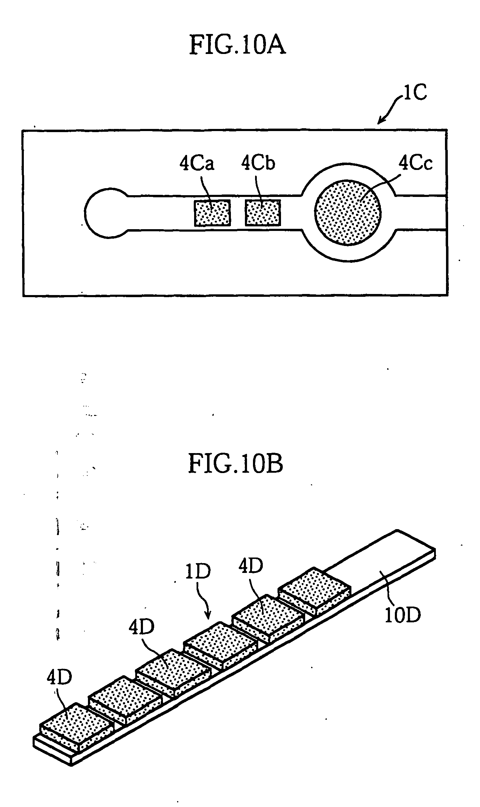

The production method according to the present invention is applicable not only to the production of the analytical tool 1 shown in Figs. 1 and 2, but also to other types of analytical tools provided with reagent members. Other typical examples to which the present invention is applicable are shown in Figs. 9A-9B, and Figs. 10A-10B, for example.

In the analytical tool 1A shown in Fig. 9A, the reagent member 4A has a stacking structure, at the reagent holding portion 22, which is composed of first and second reagent layers 4Aa, 4Ab containing different reagents, respectively. The second reagent layer 4Ab is laminated on the first reagent layer 4Aa via a water-soluble separation layer 4Ac. The separation a layer 4Ac, typically formed of CMC (carboxymethylcellulose), prevents the reagent of the first reagent layer 4Aa and the reagent of the second reagent layer 4Ab from blending before the sample is supplied to the reagent holding portion 22. In the analytical tool 1A, when the sample is supplied to the reagent holding portion 22, the reagent of the first reagent layer 4Aa, the reagent of the second reagent layer 4Ab and the sample react. A production method similar to the above-described method may be applied to the analytical tool 1A for forming the reagent layers 4Aa, 4Ab.

The analytical tool 1B shown in Fig. 9B includes a reagent member 4B made up of several kinds of separate reagent members 4Ba, 4Bb, 4Bc (three kinds in the figure). In the figure, for convenience of illustration, the size of each reagent member 4Ba, 4Bb, 4Bc is significantly exaggerated. In the reagent holding portion 22, the reagent members 4Ba, 4Bb, 4Bc may overlap with each other. Such a reagent member 4B can be formed by applying and drying a material liquid including a first reagent, and then applying and drying a material liquid including a second reagent, and finally applying and drying a material liquid including a third reagent.

The analytical tool 1C shown in Fig. 10A includes a plurality of reagent members 4Ca, 4Cb, 4Cc containing different reagents and being formed apart from each other in a plane. The analytical tool 1D shown in Fig. 10B is not formed with a recess (reagent holding portion), but provided with a plurality of reagent members 4D on a base plate whose surfaces are flat. For the analytical tools 1C and 1D again, a manufacturing method similar to the one described above may be employed to produce the reagent members 4Ca, 4Cb, 4Cc and 4D.

## Claims

1. A method of manufacturing an analytical tool, the method comprising a reagent member forming process for providing a base plate with a reagent member containing a reagent that reacts with a specific component contained in sample liquid,
wherein the reagent member forming process comprises a step of applying and drying in which a material liquid containing the reagent is applied and then the material liquid is dried,
**characterized by** repeating the applying and drying step a plurality of times using the material liquid containing the same reagent until the reagent member grows from an initial dry thickness (T1) to a greater dry thickness (T2).

2. The method of manufacturing an analytical tool according to claim 1, wherein the step of applying and drying is repeated 2-200 times.

3. The method of manufacturing an analytical tool according to claim 1, wherein the material liquid contains 0.1-60wt% of the reagent.

4. The method of manufacturing an analytical tool according to claim 1, wherein the base plate comprises a reagent holding portion formed as a recess including a bottom surface and a side surface,
wherein the reagent member is formed in contact with the bottom surface.

5. The method of manufacturing an analytical tool according to claim 4, wherein the material liquid is applied to an area of the bottom surface spaced from the side surface by a constant distance.

6. The method of manufacturing an analytical tool according to claim 5, wherein the distance between the side surface and the area applied with the material liquid is no smaller than 0.1µm.

7. The method of manufacturing an analytical tool according to claim 4, wherein the reagent holding portion has a depth of 50-200µm.

8. The method of manufacturing an analytical tool according to claim 4, wherein the recess has a volume of 0.05-5µL.

9. The method of manufacturing an analytical tool according to claim 1, wherein the material liquid is applied with use of an inkjet-type dispenser.

10. The method of manufacturing an analytical tool according to claim 9, wherein the dispenser is designed to dispense a droplet of 10-2000pL,
wherein the dispenser is used for applying the material liquid in a manner such that a plurality of droplets are attached to an application target portion.

11. The method of manufacturing an analytical tool according to claim 1, wherein an amount of the material liquid applied in each of the applying and drying steps is 1-200nL.

12. The method of manufacturing an analytical tool according to claim 1, wherein the material liquid is dried by supply of heat energy.

13. The method of manufacturing an analytical tool according to claim 12, wherein the supply of heat energy is performed by utilizing radiant heat applied from above the material liquid.

14. The method of manufacturing an analytical tool according to claim 12, wherein the supply of heat energy is attained by holding a heat source in contact with a rear surface of the base plate.

15. The method of manufacturing an analytical tool according to claim 1, wherein a thin layer having a thickness of 0.1-5.0µm is formed at each step of the applying and drying,
wherein the reagent member is formed to have a thickness of 1.0-50.0µm upon completion of the reagent member forming process.

## Patentansprüche

1. Verfahren zum Herstellen eines analytischen Werkzeugs, wobei das Verfahren einen Reagenzelement-Bildungsprozess umfasst, um eine Basisplatte mit einem Reagenzelement, das ein Reagenz enthält, das mit einer in einer Probenflüssigkeit enthaltenden bestimmten Komponente reagiert, zu schaffen,
wobei der Reagenzelement-Bildungsprozess einen Schritt des Aufbringens und Trocknens enthält, in dem eine Materialflüssigkeit, die das Reagenz enthält, aufgebracht wird, woraufhin die Materialflüssigkeit getrocknet wird,
**gekennzeichnet durch** mehrmaliges Wiederholen des Aufbringungs- und Trocknungsschrittes unter Verwendung der dasselbe Reagenz enthaltenden Materialflüssigkeit, bis das Reagenzelement von einer anfänglichen trockenen Dicke bzw. Trockendicke (T1) zu einer größeren trockenen Dicke bzw. Trockendicke (T2) wächst bzw. gewachsen ist.

2. Verfahren zum Herstellen eines analytischen Werkzeugs nach Anspruch 1, wobei der Schritt des Aufbringens und Trocknens 2-200 Mal wiederholt wird.

3. Verfahren zum Herstellen eines analytischen Werkzeugs nach Anspruch 1, wobei die Materialflüssigkeit 0,1-60 Gew.-% des Reagenzes enthält.

4. Verfahren zum Herstellen eines analytischen Werkzeugs nach Anspruch 1, wobei die Basisplatte einen Reagenzhalteabschnitt aufweist, der als eine Aussparung ausgebildet ist, die eine Bodenoberfläche und eine Seitenoberfläche enthält,
wobei das Reagenzelement in Kontakt mit der Bodenoberfläche ausgebildet ist.

5. Verfahren zum Herstellen eines analytischen Werkzeugs nach Anspruch 4, wobei die Materialflüssigkeit auf einen Bereich der Bodenoberfläche aufgebracht wird, die von der Seitenoberfläche um eine konstante Strecke beabstandet ist.

6. Verfahren zum Herstellen eines analytischen Werkzeugs nach Anspruch 5, wobei die Strecke zwischen der Seitenoberfläche und dem Bereich, auf den die Materialflüssigkeit aufgebracht wird, nicht kleiner als 0,1 µm ist.

7. Verfahren zum Herstellen eines analytischen Werkzeugs nach Anspruch 4, wobei der Reagenzhalteabschnitt eine Tiefe von 50-200 µm hat.

8. Verfahren zum Herstellen eines analytischen Werkzeugs nach Anspruch 4, wobei die Aussparung ein Volumen von 0,05-5 µl hat.

9. Verfahren zum Herstellen eines analytischen Werkzeugs nach Anspruch 1, wobei die Materialflüssigkeit unter Verwendung eines Spenders des Tintenstrahltyps aufgebracht wird.

10. Verfahren zum Herstellen eines analytischen Werkzeugs nach Anspruch 9, wobei der Spender entworfen ist, um ein Tröpfchen mit 10-2000 pl abzugeben,
wobei der Spender verwendet wird, um die Materialflüssigkeit in der Weise aufzubringen, dass an einem Aufbringungszielabschnitt mehrere Tröpfchen befestigt werden.

11. Verfahren zum Herstellen eines analytischen Werkzeugs nach Anspruch 1, wobei eine Menge der Materialflüssigkeit, die in jedem der Aufbringungs- und Trocknungsschritte aufgebracht wird, 1-200 nl beträgt.

12. Verfahren zum Herstellen eines analytischen Werkzeugs nach Anspruch 1, wobei die Materialflüssigkeit durch die Zufuhr von Wärmeenergie getrocknet wird.

13. Verfahren zum Herstellen eines analytischen Werkzeugs nach Anspruch 12, wobei die Zufuhr von Wärmeenergie unter Verwendung von Strahlungswärme, die von oberhalb der Materialflüssigkeit aufgebracht wird, erfolgt.

14. Verfahren zum Herstellen eines analytischen Werkzeugs nach Anspruch 12, wobei die Zufuhr von Wärmeenergie durch Halten einer Wärmequelle in Kontakt mit einer rückseitigen Oberfläche der Basisplatte erzielt wird.

15. Verfahren zum Herstellen eines analytischen Werkzeugs nach Anspruch 1, wobei in jedem Schritt des Aufbringens und Trocknens eine dünne Schicht mit einer Dicke von 0,1-5,0 µm gebildet wird,
wobei das Reagenzelement so gebildet wird, dass es nach Abschluss des Reagenzelement-Bildungsprozesses eine Dicke von 1,0-50,0 µm hat.

## Revendications

1. Procédé de fabrication d'un outil analytique, le procédé comprenant un procédé de formation d'un élément réactif destiné à fournir à une plaque de base un élément réactif qui contient un réactif qui réagit avec un composant spécifique contenu dans un échantillon liquide ;
dans lequel le procédé de formation d'un élément réactif comprend une étape d'application et de séchage dans laquelle un matériau liquide qui contient le réactif est appliqué et ensuite le matériau liquide est séché ;
**caractérisé par** le fait de répéter l'étape d'application et de séchage une pluralité de fois en utilisant le matériau liquide qui contient le même réactif jusqu'à ce que l'élément réactif se développe à partir d'une épaisseur sèche initiale (T1) jusqu'à une épaisseur sèche plus grande (T2).

2. Procédé de fabrication d'un outil analytique selon la revendication 1, dans lequel l'étape d'application et de séchage est répétée à raison de 2 à 200 fois.

3. Procédé de fabrication d'un outil analytique selon la revendication 1, dans lequel le matériau liquide contient entre 0,1 % et 60 % en poids de réactif.

4. Procédé de fabrication d'un outil analytique selon la revendication 1, dans lequel la plaque de base comprend une partie de maintien de réactif formée sous la forme d'un évidement qui comprend une surface inférieure et une surface latérale ;
dans lequel l'élément réactif est formé en contact avec la surface inférieure.

5. Procédé de fabrication d'un outil analytique selon la revendication 4, dans lequel le matériau liquide est appliqué sur une zone de la surface inférieure espacée de la surface latérale d'une distance constante.

6. Procédé de fabrication d'un outil analytique selon la revendication 5, dans lequel la distance qui sépare la surface latérale de la zone sur laquelle a été appliqué le matériau liquide n'est pas inférieure à 0,1 µm.

7. Procédé de fabrication d'un outil analytique selon la revendication 4, dans lequel la partie de maintien de réactif présente une profondeur comprise entre 50 µm et 200 µm.

8. Procédé de fabrication d'un outil analytique selon la revendication 4, dans lequel l'évidement présente un volume compris entre 0,05 µl et 5 µl.

9. Procédé de fabrication d'un outil analytique selon la revendication 1, dans lequel le matériau liquide est appliqué en utilisant un dispositif de distribution du type jet d'encre.

10. Procédé de fabrication d'un outil analytique selon la revendication 9, dans lequel le dispositif de distribution est conçu de manière à distribuer une gouttelette dont le volume est compris entre 10 pl et 2000 pL ;
dans lequel le dispositif de distribution est utilisé de façon à appliquer le matériau liquide de telle manière qu'une pluralité de gouttelettes soient fixées sur une partie cible d'application.

11. Procédé de fabrication d'un outil analytique selon la revendication 1, dans lequel la quantité de matériau liquide appliqué au cours de chacune des étapes d'application et de séchage est comprise entre 1 nl et 200 nl.

12. Procédé de fabrication d'un outil analytique selon la revendication 1, dans lequel le matériau liquide est séché suite à un apport en énergie thermique.

13. Procédé de fabrication d'un outil analytique selon la revendication 12, dans lequel l'apport en énergie thermique est exécuté en utilisant une chaleur rayonnante appliquée à partir du dessus du matériau liquide.

14. Procédé de fabrication d'un outil analytique selon la revendication 12, dans lequel l'apport en énergie thermique est obtenu en maintenant une source de chaleur en contact avec une surface arrière de la plaque de base.

15. Procédé de fabrication d'un outil analytique selon la revendication 1, dans lequel une couche mince qui présente une épaisseur comprise entre 0,1 µm et 5,0 µm est formée à chaque étape d'application et de séchage ;
dans lequel l'élément réactif est formé de manière à présenter une épaisseur comprise entre 1,0 µm et 50,0 µm à la fin du procédé de formation de l'élément réactif.
